Europäisches Patentamt

European Patent Office

Office européen des brevets

(19)

(11) Veröffentlichungsnummer : **0 449 804 A2**

(12) # EUROPÄISCHE PATENTANMELDUNG

(21) Anmeldenummer : **91890061.4**

(22) Anmeldetag : **26.03.91**

(51) Int. Cl.$^5$ : **G02B 6/42, F21V 8/00, G02B 6/32, G02B 6/26**

(30) Priorität : **28.03.90 AT 723/90**

(43) Veröffentlichungstag der Anmeldung : **02.10.91 Patentblatt 91/40**

(84) Benannte Vertragsstaaten : **AT BE CH DE DK FR GB IT LI NL SE**

(71) Anmelder : **DIPL.-ING. HEINRICH KOLP GESELLSCHAFT m.b.H. Alte Gasse 27 A-2551 Enzesfeld (AT)**

(72) Erfinder : **Kolp, Heinrich, Dipl.-Ing. Alte Gasse 27 A-2551 Enzesfeld (AT)**

(74) Vertreter : **Gibler, Ferdinand, Dipl.Ing. Dr. techn. Dorotheergasse 7/14 A-1010 Wien (AT)**

(54) **Anordnung zur Einkoppelung von Licht in Lichtleiter.**

(57)    Anordnung zur Einkoppelung von Licht in Lichtleiter, insbesondere für faseroptische Signalgeber, vermittels eines Spiegels (1), in dessen Innerem sich eine Lichtquelle (2) befindet. Um bei einer derartigen Anordnung eine sehr hohe Lichtausbeute zu erzielen, ist vorgesehen, daß sie in der Lichtaustrittsebene des Spiegels, insbesondere eines Facettenreflektors (1) aus nebeneinander angeordneten Kegeln (4, 4') besteht, welche die aus dem Spiegel (1) austretenden Lichtstrahlen (7) durch mehrmalige Reflexion in ihren Spitzen konzentrieren und an deren Enden eine Haltevorrichtung (5) angebracht, vorzugsweise aufgesteckt ist, welche die Lichtleiter (6) achsengleich zu den einzelnen Kegeln (4, 4') positioniert.

EP 0 449 804 A2

Fig. 1

Die vorliegende Erfindung betrifft eine Anordnung zur Einkoppelung von Licht in Lichtleiter, insbesondere für faseroptische Signalgeber, vermittels eines Spiegels, in dessen Innerem sich eine Lichtquelle befindet.

Derartige Anordnungen finden hauptsächlich in der Verkehrstechnik, beispielsweise bei Verkehrszeichen Verwendung und sind bereits seit längerer Zeit bekannt. Solche herkömmlichen Lichteinkoppelungsanordnungen sind im wesentlichen dadurch charakterisiert, daß die einzelnen Lichtleiter an einem Ende zusammengefaßt und in den Brennpunkt eines elliptischen Spiegels gebracht sind, wobei sich im anderen Brennpunkt des Spiegels die Lichtquelle befindet.

Es hat sich nun herausgestellt, daß diese Art der Einkoppelung von Licht in Lichtleiter mit zahlreichen Nachteilen verbunden ist. Da elliptische Spiegel verwendet werden, tritt ein hoher Lichtverlust auf, denn ein wesentlicher Teil des Raumwinkels der Strahlung kann nicht genützt werden. Des weiteren ist die Lichtverteilung auf der Brennfläche äußerst inhomogen. Hohe thermische Belastungen auf der Brennfläche führen insbesondere zu schwerwiegenden Problemen mit bei diesen Anordnungen zum Einsatz gelangenden Kunstharzbindemassen und bei der Verwendung von Polymethylmethacrylat (PMMA)-Leitern. Ein weiterer wesentlicher Nachteil ist auch darin gelegen, daß bei einem Bruch eines einzigen Leiters das gesamte Faserbündel unbrauchbar wird.

Um nun die auftretenden Lichtverluste gering zu halten bzw. annähernd zu vermeiden, muß die Fläche im Brennpunkt des Lichtes feinst poliert sein, was wiederum fertigungstechnisch äußerst aufwendig und mit hohen Kosten verbunden ist.

Ziel dieser Erfindung ist es also, eine Anordnung der eingangs genannten Art zu schaffen, welche die genannten Nachteile, insbesondere hohe Lichtverluste durch unkontrollierbare Streulichtanteile, inhomogene Lichtverteilungen auf der Brennfläche, punktuelle thermische Belastungen, sowie hohe Herstellungskosten, überwindet und eine hohe Lichtausbeute liefert.

Dieses Ziel wird erfindungsgemäß dadurch erreicht, daß die Anordnung in der Lichtaustrittsebene des Spiegels, insbesondere eines Facettenreflektors aus nebeneinander angeordneten Kegeln besteht, welche die aus dem Spiegel, insbesondere dem Facettenreflektor austretenden Lichtstrahlen durch mehrmalige Reflexion in ihren Spitzen konzentrieren und an deren Enden eine Haltevorrichtung angebracht, vorzugsweise aufgesteckt ist, welche die Lichtleiter achsengleich zu den einzelnen Kegeln positioniert.

Es kann infolgedessen die gesamte Strahlung der Lichtquelle genützt werden. Durch die derart gestaltete Anordnung der Haltevorrichtung tritt nahezu der gesamte Lichtstrom, der aus einem Kegel austritt, in den entsprechenden Lichtleiter ein. Es tritt nur ein äußerst geringer Lichtverlust auf.

Ein weiteres wesentliches Merkmal der vorliegenden Erfindung ist darin gelegen, daß an der dem Spiegel, insbesondere dem Facettenreflektor zugewandten Seite, an der Grundfläche jedes Randkegels ein optisches Mittel angeordnet ist.

Dadurch kann der Spiegel kürzer gestaltet werden, da in den Randbereichen die schräg einfallenden Lichtstrahlen in einen Winkel zum Kegelmantel gebracht werden, der kleiner als der Totalreflexionswinkel ist. Die gesamte Anordnung ist fertigungstechnisch einfach herzustellen und dadurch mit geringen Kosten verbunden.

In Ausgestaltung der Erfindung kann vorgesehen sein, daß das optische Mittel aus einem Prisma und-/oder Sammellinse besteht.

Vorallem durch die Kombination Prisma und Sammellinse lassen sich auf einfache Weise Fehler wie die chromatische Aberration oder Astigmatismus vermeiden, wodurch sichergestellt ist, das Licht unterschiedlicher Wellenlänge und Einfallswinkel in einem Punkt fokusierbar ist, und somit ohne Streulichtanteile eine maximale Lichtmenge in die Lichtleiter einbringbar ist. Die gesamte Anordnung ist fertigungstechnisch einfach herzustellen und dadurch mit geringen Kosten verbunden.

Des weiteren ist erfindungsgemäß vorgesehen, daß die Kegel Winkel aufweisen, welche die an den Begrenzungsflächen auftreffenden Lichtstrahlen unter Winkel reflektieren, die kleiner als der Totalreflexionswinkel sind, wodurch keiner der einfallenden Lichtstrahlen durch Totalreflexion verlorengeht.

Eine weitere Maßnahme, die Lichtausbeute zu erhöhen, ist dadurch gekennzeichnet, daß die Querschnitte der Kegel in Form von Sechsecken ausgebildet sind.

Schließlich kann als weiteres Merkmal der Erfindung vorgesehen sein, daß die Haltevorrichtung Aufnahmen für die Kegel und Aufnahmen für die Lichtleiter aufweist, wobei die Freiräume zwischen den dem Spiegel abgewandten Enden der Kegel und den Enden der Lichtleiter mit einem optischen Gel ausgefüllt sind. Es wird somit der Halt der Kegel und der Lichtleiter verstärkt, wodurch eine effektivere exakte Positionierung der Lichtleiter möglich ist. Außerdem kann bei einem Bruch eines einzigen Lichtleiters ein neuer ohne Schwierigkeiten eingesetzt werden, und das gesamte Faserbündel ist wieder voll funktionstüchtig.

Zum Zwecke einer weiteren Verstärkung der Lichtausbeute ist vorgesehen, daß die erfindungsgemäße Anordnung aus einem hochtransparenten Material, vorzugsweise Polycarbonat oder Polymethylmethacrylat besteht.

In einer weiteren Ausgestaltung der Erfindung kann vorgesehen sein, daß zwischen der Lichtquelle und der Lichtaustrittsebene des Spiegels ein optisches Mittel derart angeordnet ist, daß der Anteil des Lichtstromes, der die Lichtquelle bei nicht vorgesetztem optischen Mittel in einem Winkelbereich verläßt, innerhalb dessen er den Spiegel nicht tangiert, von dem optischen Mittel erfaßt und normal zur Lichtaustrittsebene des Spiegels ausgerichtet wird.

Durch diese Maßnahme wird auf vorteilhafte Weise erreicht, daß auch jener Teil der Lichtstrahlen, der von der Lichtquelle ausgesendet wird, ohne den Spiegel zu tangieren, also unter einem anderen Winkel aus der Lichtaustrittsebene des Spiegels als der vom Spiegel reflektierte und normal zur Lichtaustrittsebene ausgerichtete Teil der Lichtstrahlen austritt, ebenfalls normal zur Lichtaustrittsebene ausgerichtet wird, wodurch die in die Lichtleiter gelangende Lichtmenge weiter erhöht wird.

Weiters kann vorgesehen sein, daß das optische Mittel aus einem Linsensystem, vorzugsweise aus einer einzigen Sammellinse besteht.

Nachfolgend wird die Erfindung anhand der Zeichnungen näher erläutert, in welchen die

Fig. 1 schematisch die Anordnung zur Einkoppelung von Licht in Lichtleiter zeigt,

Fig. 2 ein Ausführungsbeispiel der Haltevorrichtung für die Kegel und die Lichtleiter darstellt,

Fig. 3 eine schematische Anordnung eines Spiegels mit einer Linse zwischen Lichtquelle und Lichtaustrittsebene, und

Fig. 4 eine Ansicht eines Kegels mit Sammellinse zeigen.

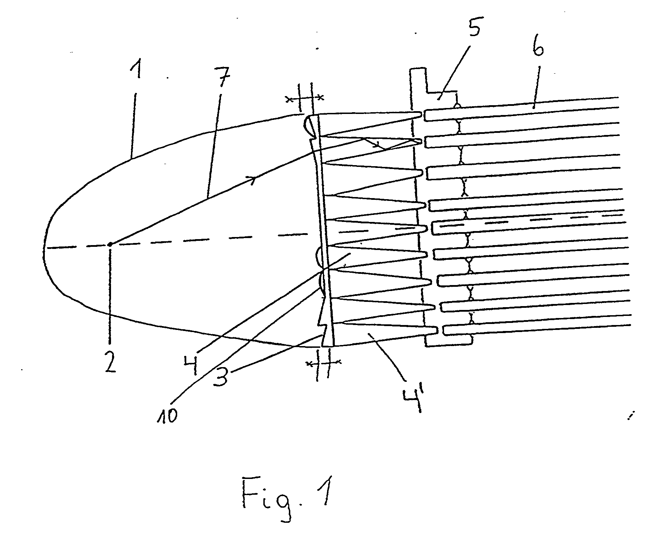

Wie aus Fig. 1 ersichtlich, sind in der Lichtaustrittsebene eines Spiegels, insbesondere eines Facettenreflektors 1, in dessen Innerem sich eine Lichtquelle 2 befindet, nebeneinander angeordnete Kegel 4, 4' vorgesehen, welche die aus dem Spiegel 1 austretenden Lichtstrahlen durch mehrmalige Reflexion in ihren Spitzen konzentrieren. Der Facettenspiegel 1 hat die Aufgabe, das Licht der Lichtquelle 2 in seiner Austrittsebene zu homogenisieren. An den dem Spiegel 1 abgewandten Enden der Kegel 4, 4' ist eine Haltevorrichtung 5 angebracht, vorzugsweise aufgesteckt, welche die Lichtleiter 6 achsengleich zu den einzelnen Kegeln 4, 4' positioniert. An der dem Spiegel 1 zugewandten Seite ist an der Grundfläche jedes Randkegels 4' ein Prisma 3 angeordnet. Die Kegel 4, 4' weisen Winkel auf, welche die an den Begrenzungsflächen auftreffenden Lichtstrahlen 7 unter Winkel reflektieren, die kleiner als der Totalreflexionswinkel sind. Daher werden die Lichtstrahlen 7 wiederum ins Material abgelenkt. In Ausgestaltung der Erfindung können die querschnitte der Kegel 4, 4' auch in Form von Sechsecken ausgebildet sein. Die gesamte erfindungsgemäße Anordnung besteht aus einem hochtransparenten Material, vorzugsweise Polycarbonat oder Polymethylmethacrylat (PMMA) und liefert eine um 100 bis 200 % gesteigerte Lichtausbeute.

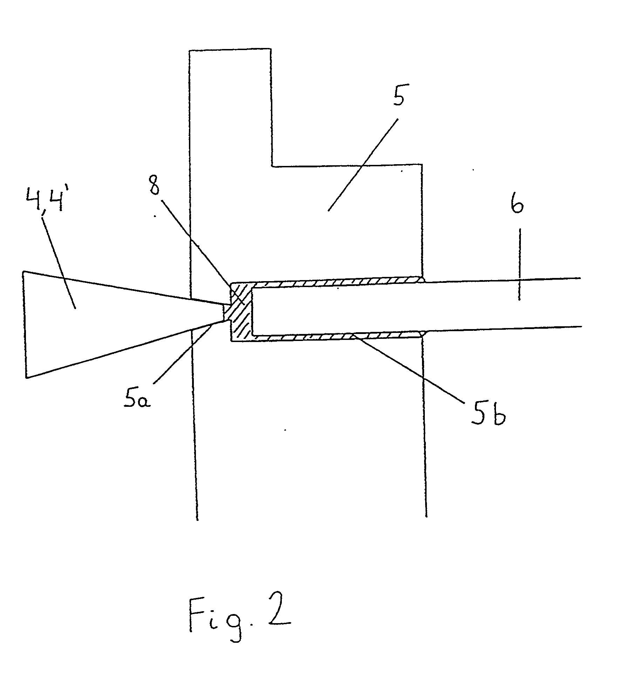

In Fig. 2 ist ein Ausführungsbeispiel der Haltevorrichtung 5 gezeigt, welche Aufnahmen 5a für die Kegel 4, 4' und Aufnahmen 5b für die Lichtleiter 6 aufweist. Die Freiräume zwischen den dem Spiegel 1 abgewandten Enden der Kegel 4, 4' und den Enden der Lichtleiter 6 sind mit einem optischen Gel 8, einer Pasta oder dergleichen ausgefüllt. Darüberhinaus können auch die Freiräume zwischen den Längsseiten der Lichtleiter 6 und den Aufnahmen 5b mit derartigen Materialien gefüllt sein. Die Fixierung der Lichtleiter 6 in der Haltevorrichtung 5, welche in Fig. 2 nur schematisch angedeutet ist, kann auch folgendermaßen hergestellt sein:

– Die Lichtleiter 6 können in die Haltevorrichtung 5 beispielsweise auch mit einem anaerobem Kleber eingeklebt sein, wobei der Kleber gleichzeitig die Funktion des optischen Gels 8 erfüllen kann.

– Die Aufnahme 5b ist mit dem optischen Gel 8 konisch ausgefüllt, und der Lichtleiter 6 wird unter sanftem Druck eingepreßt. Wenn der Winkel des Konus kleiner als der Selbstraumwinkel ist, ist der Lichtleiter 6 nicht mehr lösbar, wobei jedoch bei beiden genannten Maßnahmen die Faser nicht mehr ersetzt werden kann.

– Der Lichtleiter 6 ist mit einer Spannzange (nicht gezeigt) festgehalten. Die Spannzangen können auf einer Platte od. dgl. vereinigt sein, sodaß alle Lichtleiter 6 mit einem Druck fixiert werden. Des weiteren kann die Platte mit dem Kegelträger beispielsweise durch lösbares Verschrauben oder nichtlösbares Warmverprägen oder Verkleben fest verbunden sein.

Es hat sich herausgestellt, daß es genügt, die Prismen 3 nur in den Randzonen anzuordnen. In Ausgestaltung der Erfindung kann jedoch vorgesehen sein, daß auch im Zentrum Prismen angeordnet sind, bzw. daß die Prismen 3 durch Sammellinsen 10 ersetzt, oder in Kombination zum Einsatz gebracht werden.

Die weiteren Ausgestaltungsmöglichkeiten der Erfindung sind äußerst vielfältig. So können beispielsweise die Krümmung des Spiegels 1, wie auch die Längen bzw. Neigungen der Prismen 3 und/oder Linsen 10 den speziellen Anforderungen entsprechend dimensioniert werden.

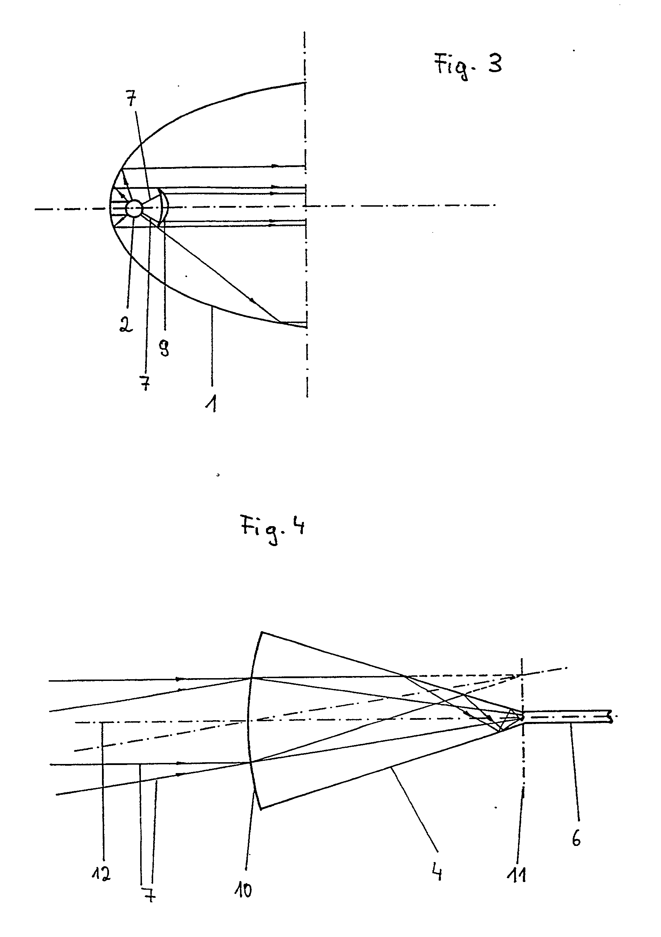

In Fig. 3 ist ein Spiegel 1 ersichtlich, bei dem zwischen der Lichtquelle 2 und der Lichtaustrittsebene eine Sammellinse 9 angeordnet ist. Die Sammellinse 9 verhindert, daß nicht parallel und normal zur Lichtaustrittsebene ausgerichtete Strahlen 7 in die Lichtaustrittsebene des Spiegels 1 gelangen.

Die Sammellinse 9 ist dabei so angeordnet, daß die Lichtquelle 2 im Brennpunkt der Linse 9 liegt, wobei der Durchmesser so gewählt ist, daß die bereits vom Spiegel 1 parallel gerichteten Strahlen 7 nicht in den Bereich des Strahlenganges der Linse 9 gelangen.

Fig. 4 stellt einen Kegel 4 mit einer davor angeordneten Sammellinse 10 dar. Durch die Linse 10 werden die weitgehend parallel und normal zur Lichtaustrittsebene ausgerichteten Strahlen 7 auf einen Brennpunkt fokusiert, wobei die Brennweite der Linse 10 so gewählt ist, daß der Brennpunkt in der Austrittsebene 11 des Kegels 4 liegt.

Lichtstrahlen 7, die von der Richtung der optischen Hauptachse 12 der Linse 10 abweichen werden dabei durch die Begrenzungsflächen des Kegels 4 so reflektiert, daß sie ebenfalls in der Austrittsebene 11 des Kegels 4 fokusieren.

## Patentansprüche

1. Anordnung zur Einkoppelung von Licht in Lichtleiter, insbesondere für faseroptische Signalgeber, vermittels eines Spiegels, in dessen Innerem sich eine Lichtquelle befindet, dadurch gekennzeichnet, daß die Anordnung in der Lichtaustrittsebene des Spiegels, insbesondere eines Facettenreflektors (1), aus nebeneinander angeordneten Kegeln (4, 4') besteht, welche die aus dem Spiegel, insbesondere dem Facettenreflektor (1) austretenden Lichtstrahlen (7) durch mehrmalige Reflexion in ihren Spitzen konzentrieren und an deren Enden eine Haltevorrichtung (5) angebracht, vorzugsweise aufgesteckt ist, welche die Lichtleiter (6) achsengleich zu den einzelnen Kegeln (4, 4') positioniert.

2. Anordnung nach Anspruch 1, dadurch gekennzeichnet, daß an der dem Spiegel, insbesondere dem Facettenreflektor (1), zugewandten Seite, an der Grundfläche jedes Randkegels (4') ein optisches Mittel angeordnet ist.

3. Anordnung nach den Ansprüchen 1 und 2, dadurch gekennzeichnet, daß das optische Mittel aus einem Prisma (3) und/oder einer Sammellinse (10) besteht.

4. Anordnung nach Anspruch 1, dadurch gekennzeichnet, daß die Kegel (4, 4') Winkel aufweisen, welche die an den Begrenzungsflächen auftreffenden Lichtstrahlen (7) unter Winkel reflektieren, die kleiner als der Totalreflexionswinkel sind.

5. Anordnung nach einem der Ansprüche 1 bis 4, dadurch gekennzeichnet, daß die Querschnitte der Kegel (4, 4') in Form von Sechsecken ausgebildet sind.

6. Anordnung nach Anspruch 1, dadurch gekennzeichnet, daß die Haltevorrichtung (5) Aufnahmen (5a) für die Kegel (4, 4') und Aufnahmen (5b) für die Lichtleiter (6) aufweist, wobei die Freiräume zwischen den dem Spiegel (1) abgewandten Enden der Kegel (4, 4') und den Enden der Lichtleiter (6) mit einem optischen Gel (8) ausgefüllt sind.

7. Anordnung nach den Ansprüchen 1 und 2, dadurch gekennzeichnet, daß sie aus einem hochtransparenten Material, vorzugsweise Polycarbonat oder Polymethylmethacrylat besteht.

8. Anordnung nach Anspruch 1, dadurch gekennzeichnet, daß zwischen der Lichtquelle (2) und der Lichtaustrittsebene des Spiegels (1) ein optisches Mittel (9) derart angeordnet ist, daß der Anteil des Lichtstromes, der die Lichtquelle (2) bei nicht vorgesetztem optischen Mittel (9) in einem Winkelbereich verläßt, innerhalb dessen er den Spiegel (1) nicht tangiert, von dem optischen Mittel (9) erfaßt und normal zur Lichtaustrittsebene des Spiegels (1) ausgerichtet wird.

9. Anordnung nach Anspruch 8, dadurch gekennzeichnet, daß das optische Mittel (9) aus einem Linsensystem, vorzugsweise aus einer einzigen Sammellinse besteht.

Fig. 1

Fig. 2

Fig. 3

Fig. 4